# FASCICULE DE BREVET EUROPEEN

(11) **EP 1 891 315 B1**
(45) Date de publication et mention de la délivrance du brevet: **12.12.2012**
(21) Numéro de dépôt: 06794425.6
(22) Date de dépôt: 15.05.2006
(51) Int. Cl.: F02D 41/14, F01N 11/00

(54) **PROCEDE ET DISPOSITIF DE DETECTION DE PRESENCE D'UN SYSTEME DE TRAITEMENT D'EFFLUENTS GAZEUX DANS UNE LIGNE D'ECHAPPEMENT D'UN MOTEUR A COMBUSTION INTERNE**
VERFAHREN UND VORRICHTUNG ZUR ERKENNUNG DES VORHANDENSEIN EINES ABGASVERARBEITUNGSSYSTEMS IN DER ABGASLEITUNG EINES VERBRENNUNGSMOTORS
METHOD AND DEVICE FOR DETECTING THE PRESENCE OF AN EXHAUST GAS TREATMENT SYSTEM IN AN EXHAUST LINE OF AN INTERNAL COMBUSTION ENGINE

(30) Priorité: 31.05.2005 FR 0505515
(43) Date de publication de la demande: 27.02.2008
(73) Titulaire: Renault SAS, 92100 Boulogne Billancourt (FR)
(72) Inventeur: LEPRIEUR, Laurent, F-91470 Limours (FR); ROUAULT, Vincent, F-78180 Montigny Le Bretonneux (FR); PRADEILLES, Cyril, F-94370 Sucy en Brie (FR)
(86) Numéro de dépôt international: PCT/FR2006/050440
(87) Numéro de publication internationale: WO 2007/003816

(56) Documents cités:
- EP-A- 0 236 659
- EP-A- 0 890 716
- EP-A- 1 052 385
- DE-A1- 10 228 659
- US-A1- 2004 112 044

## Description

La présente invention concerne le domaine du traitement des gaz d'échappement d'un moteur à combustion interne de véhicule automobile, et plus particulièrement, un procédé et un dispositif de détection de présence d'un système de traitement d'effluents gazeux dans une ligne d'échappement d'un véhicule automobile.

L'invention s'applique à tous types de systèmes de traitement, du type filtre à particules, piège à oxyde d'azote, convertisseur catalytique ou à fonction oxydante, ....

Certaines réglementations en vigueur imposent que des systèmes de diagnostic embarqués, qui procèdent à un contrôle du bon fonctionnement des dispositifs de traitement des effluents gazeux, se chargent en outre de détecter la présence d'un tel système.

Divers types de technique sont à ce jour utilisés pour détecter la présence ou l'absence d'un système de traitement d'effluents gazeux dans une ligne d'échappement.

Il est ainsi connu de détecter la présence d'un filtre à particules dans une ligne d'échappement d'un moteur à combustion interne à partir d'une détermination de la pression différentielle aux bornes du filtre, l'absence du filtre à particules se traduisant par un changement de comportement de la pression différentielle.

Cependant, cette technique nécessite de travailler à des débits volumiques élevés. En outre, les informations délivrées sont peu fiables, dans la mesure où la pression différentielle est généralement élaborée à partir de mesures fortement bruitées.

Il est également connu de détecter la présence d'un piège à oxydes d'azote à partir d'informations délivrées par un capteur de richesse des gaz d'échappement disposé en aval du filtre, tel qu'une sonde de richesse binaire, ou une sonde de richesse proportionnelle, le niveau de richesse détecté permettant de déterminer l'absence ou la présence du piège à oxydes d'azote dans la ligne d'échappement.

Cette technique présente également un certain nombre d'inconvénients relatifs en particulier au fait que les signaux délivrés par le capteur sont peu fiables, dans la mesure où le vieillissement du capteur entraîne une dérive dans les mesures fournies, et relatifs au coût du capteur. En outre, la richesse mesurée par le capteur doit être traitée relativement à la richesse des gaz d'échappement en amont du piège à oxydes d'azote. Or, en ce qui concerne les moteurs Diesel, il est difficile de contrôler la richesse des gaz d'échappement en amont du piège à oxydes d'azote, de sorte que cette technique est relativement difficile à mettre en oeuvre de manière fiable.

Il est connu par DE10228659 et US2004112044 de détecter le fonctionnement d'un système de traitement d'effluents gazeux à partir des dérivées de la température en amont et en aval du système de traitement.

Au vu de ce qui précède, le but de l'invention est de pallier les inconvénients de l'état de la technique et de permettre la détection de présence d'un système de traitement d'effluents gazeux d'une ligne d'échappement d'un moteur à combustion interne de véhicule automobile, de manière fiable, simple et peu coûteuse.

L'invention a donc pour objet, selon un premier aspect, un procédé de détection de présence d'un système de traitement d'effluents gazeux dans une ligne d'échappement d'un moteur à combustion interne de véhicule automobile, comprenant les étapes de :
- détermination de la dérivée de la température en amont du système de traitement,
- détermination de la dérivée de la température en aval du système de traitement, et
- comparaison de la dérivée de la température en aval du système de traitement avec une valeur de seuil de détection d'absence du système de traitement, à partir d'un niveau prédéterminé de la dérivée de la température en amont du système de traitement.

Selon un mode de mise en oeuvre, on incrémente un compteur à chaque dépassement de la valeur de seuil et on décide que le système de traitement est absent dès que le niveau de comptage du compteur dépasse une deuxième valeur de seuil prédéterminée.

Avantageusement, on compare en outre la dérivée de la température en aval du système avec la valeur de seuil dès que la dérivée de la température en amont du système dépasse une troisième valeur de seuil.

Selon une autre caractéristique de l'invention, on divise les variations de température en amont et en aval en classes de valeurs prédéterminées de variations de température et l'on procède à une détection de l'absence du système de traitement sur un ensemble de classes de valeurs de variations de température prédéterminées.

Dans ce cas, avantageusement, chaque classe de valeurs étant associée à une probabilité d'apparition d'une variation correspondante de température, on procède à ladite détection pour des classes de valeurs supérieures à une classe de valeurs à partir de laquelle la probabilité d'obtenir une variation correspondante de température pour une ligne d'échappement pourvue d'un système de traitement prédéterminé est nulle et inférieures à une classe de valeurs à partir de laquelle la probabilité d'obtenir un accroissement de variations de température est nulle.

On décide alors que le système de traitement est absent dès que la probabilité d'obtenir une variation de température en aval du système de traitement supérieure à une valeur de seuil prédéterminée est inférieure à une probabilité d'obtenir ladite variation pour une ligne d'échappement dépourvue de système de traitement, et supérieure à une probabilité minimale.

Selon un autre aspect, l'invention a pour objet un dispositif de détection de présence d'un système de traitement d'effluents gazeux d'une ligne d'échappement d'un moteur à combustion interne, comprenant des moyens de détermination de la dérivée de la température en amont et en aval du système et une unité centrale comprenant des moyens de comparaison pour comparer la valeur déterminée de la dérivée de la température en aval du système de traitement avec une valeur de seuil de détection d'absence du système de traitement.

Selon une autre caractéristique de ce système de traitement, il comporte en outre un compteur piloté par la sortie des moyens de comparaison et qui s'incrémente à chaque dépassement de la valeur de seuil, et des deuxièmes moyens de comparaison pour comparer le niveau de comptage avec une deuxième valeur de seuil à partir de laquelle on décide que le système de traitement est absent.

Selon un mode de réalisation particulier, le dispositif de détection comporte en outre des troisièmes moyens de comparaison pour comparer la valeur calculée de la dérivée de la température en amont du système de traitement avec une troisième valeur de seuil, la dérivée de la température en aval du système de traitement étant comparée avec la première valeur de seuil dès que la dérivée de la température en amont du système de traitement dépasse la troisième valeur de seuil.

D'autres buts, caractéristiques et avantages de l'invention apparaîtront à la lecture de la description suivante, donnée uniquement à titre d'exemples non limitatifs, et faite en référence aux dessins annexés, sur lesquels :
- la figure 1 est une vue schématique d'un moteur à combustion interne équipé d'une ligne d'échappement pourvue d'un dispositif de détection de présence d'un système de traitement d'effluents gazeux conforme à l'invention ;
- la figure 2 est une vue schématique illustrant la structure générale d'un dispositif de détection de présence d'un système de traitement d'effluents gazeux ;
- la figure 3 montre des courbes illustrant la dérivée de signaux thermiques en amont et en aval d'un système de traitement d'effluents gazeux ;
- la figure 4 montre des courbes illustrant la variation de probabilité d'obtention de taux d'accroissement de température pour différentes configurations d'une ligne d'échappement ; et
- la figure 5 montre des courbes illustrant la variation de probabilité d'obtention de taux d'accroissement de température en amont et en aval d'un système de traitement d'effluents gazeux, illustrant le principe à la base de l'invention.

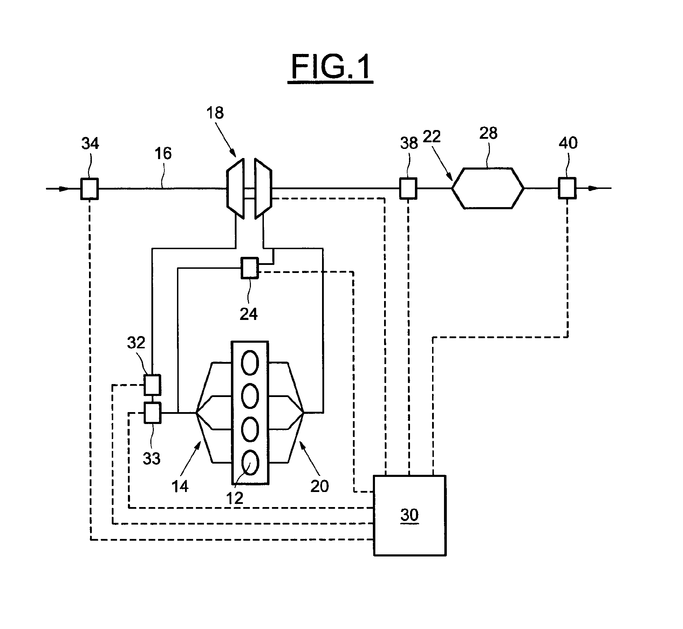

Sur la figure 1, on a représenté de façon schématique la structure générale d'un moteur à combustion interne d'un véhicule automobile, désigné par la référence numérique générale 10.

Dans l'exemple de réalisation considéré, le moteur 10 est pourvu de quatre cylindres 12 en ligne.

Les cylindres 12 sont alimentés en air par l'intermédiaire d'un répartiteur d'admission 14, lui-même alimenté par une conduite 16 pourvue d'un filtre à air (non représenté) et d'un turbocompresseur 18 de suralimentation du moteur en air.

Un collecteur d'échappement 20 récupère les gaz d'échappement issus de la combustion et évacue ces derniers vers l'extérieur, en passant par le compresseur 18 et par une ligne d'échappement 22.

Un circuit de recirculation des gaz d'échappement récupère une partie des gaz d'échappement dans le collecteur d'admission 18, de manière à limiter la quantité d'oxydes d'azote produits par la combustion tout en évitant la formation de fumées dans les gaz d'échappement.

Comme on le voit sur la figure 1, le circuit de recirculation comporte essentiellement une soupape de réglage du flux de gaz d'échappement recirculé, désignée par la référence numérique 24.

En ce qui concerne la ligne d'échappement 22, celle-ci comporte essentiellement un système de traitement d'effluents gazeux 28 constitué, par exemple, par un filtre à particules, un piège à oxydes d'azote, ou par tout type de convertisseur catalytique ou à fonction oxydante de type classique.

Enfin, le moteur 10 est associé à une unité centrale 30 assurant le contrôle du fonctionnement du moteur 10, notamment le réglage de ses paramètres de fonctionnement, ainsi que le contrôle du fonctionnement du système de traitement 28, et le diagnostic de son état de fonctionnement.

En outre, l'unité centrale 30 est dûment programmée pour assurer une détection de présence du système de traitement 28 afin, par exemple, d'émettre un signal d'alarme en cas de démontage du système de traitement.

Pour procéder au contrôle du fonctionnement du moteur 10, celui-ci est pourvu d'un capteur 32 de pression de suralimentation et d'un capteur 33 de température d'admission d'air dans le répartiteur d'admission 14, ainsi qu'un capteur 34 de débit équipant la conduite 16 d'alimentation. Ces capteurs, ainsi que les principaux organes fonctionnels du moteur et son circuit d'alimentation en air, sont raccordés à l'unité centrale 30.

En ce qui concerne la détection de présence d'un système de traitement 28, la ligne d'échappement 22 est pourvue, de part et d'autre du système de traitement 28, d'un premier capteur de température 38 destiné à mesurer la température en amont du système de traitement 28, et d'un deuxième capteur de température 40 destiné à mesurer la température en aval du système de traitement 28.

Comme cela sera décrit en détails par la suite, les valeurs de température en amont et en aval du système de traitement 28 sont traitées par l'unité centrale 30, de manière à, notamment, calculer la dérivée des températures en amont et en aval du système de traitement 28 et comparer la dérivée de la température en aval du système de traitement avec une valeur de seuil de détection d'absence du système de traitement. Cette comparaison n'est effectuée que pour des valeurs déterminées de variations de température en amont du système de traitement.

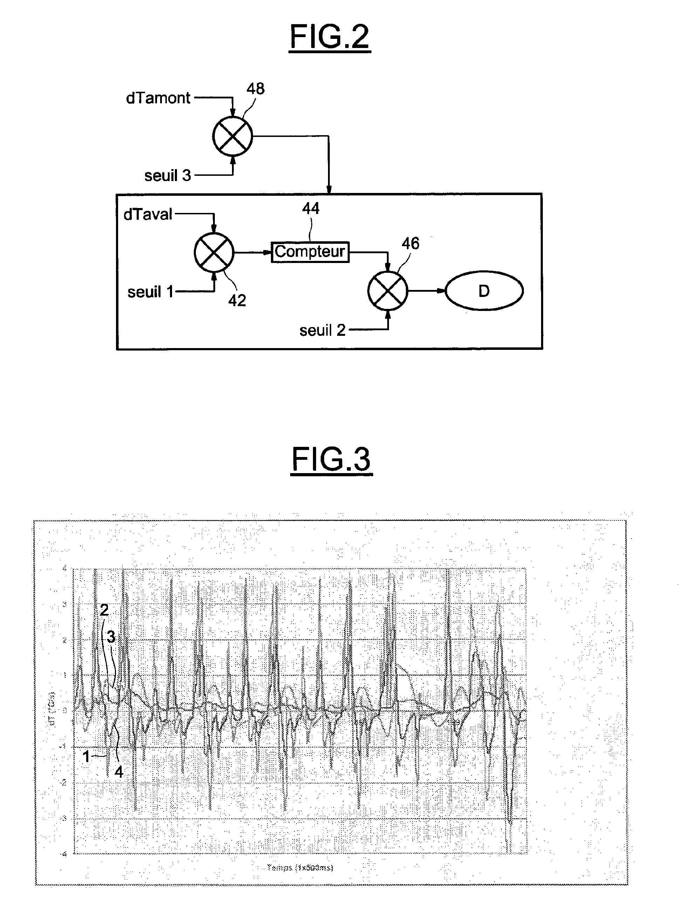

Aussi, comme représenté sur la figure 2, l'unité centrale 30 comporte un premier comparateur 42 qui assure une comparaison entre la dérivée de la température *dTaval* en aval du système de traitement 28 avec une première valeur de *seuil 1*. Un comparateur 44, piloté par la sortie du comparateur 42, s'incrémente dès que la dérivée de température T aval dépasse la valeur de *seuil 1*. Un deuxième comparateur 46 réalise une comparaison entre le niveau de comptage du compteur 44 avec une deuxième valeur de *seuil 2* pour prendre une décision *D* dès que le niveau de comptage dépasse la valeur de *seuil 2.*

Ainsi, dès que la dérivée de température en aval du système de traitement 28 dépasse la valeur de *seuil 1*, on considère que la ligne d'échappement 22 est dépourvue de système 28. Toutefois, on ne décide effectivement que la ligne d'échappement est dépourvue de son système de traitement que lorsque l'on observe un dépassement de la valeur de *seuil 1* un nombre de fois prédéterminé fixé par la valeur de *seuil 2.*

Par ailleurs, outre le compteur 44 et les comparateurs 42 et 46, l'unité centrale 30 est pourvue d'un troisième comparateur 48 qui assure une comparaison entre la dérivée de la température *dTamont,* et une troisième valeur de *seuil 3*, afin de n'autoriser la détection de présence du système de traitement 28 que lorsque la dérivée de température *dtamont* en amont du système de traitement 28 dépasse la valeur de *seuil 3*. Ainsi, un tel diagnostic n'est effectué que pour des variations temporelles de température en amont du système de traitement 28, suffisamment grandes pour pouvoir observer des différences de comportement entre une ligne d'échappement dotée d'un système de traitement et une ligne d'échappement dépourvue de système de traitement.

On va maintenant décrire, en référence aux figures 3 à 5, le principe de détection de présence du système de traitement conforme à l'invention.

On se référera tout d'abord à la figure 3, sur laquelle on a représenté la dérivée de mesures de température fournies par les capteurs 38 et 40, en amont du système 28 (courbe 1), en aval du système 28, pour un système dont la matière filtrante est constituée de « cordierit » (courbe 2), en aval d'un système de traitement 28 dont la matière filtrante est constituée de carbure de silicium (courbe 3), et la dérivée de la mesure de température délivrée par l'un des capteurs de température 38 ou 40, en l'absence de système de traitement 28 (courbe 4).

Pour exemple, ces signaux sont obtenus sur un cycle de dépollution européen normalisé ou cycle NEDC (« New European Driving Cycle») à froid.

Comme on le voit sur cette figure 3, pour un signal d'entrée donné constitué par la dérivée de la température en amont du système 28, le signal de sortie, à savoir le signal *dTaval,* est amorti et déphasé. On remarque que l'amortissement et le déphasage sont fonction de l'inertie thermique de l'organe de dépollution utilisé. Aussi, plus une inertie de celui-ci est importante, plus l'amortissement et le déphasage seront importants. Tel est en particulier le cas d'un système de traitement à base de carbure de silicium Sic, qui engendre un amortissement et un déphasage importants. Au contraire, en l'absence de système de traitement 28, le déphasage et l'amortissement sont relativement faibles.

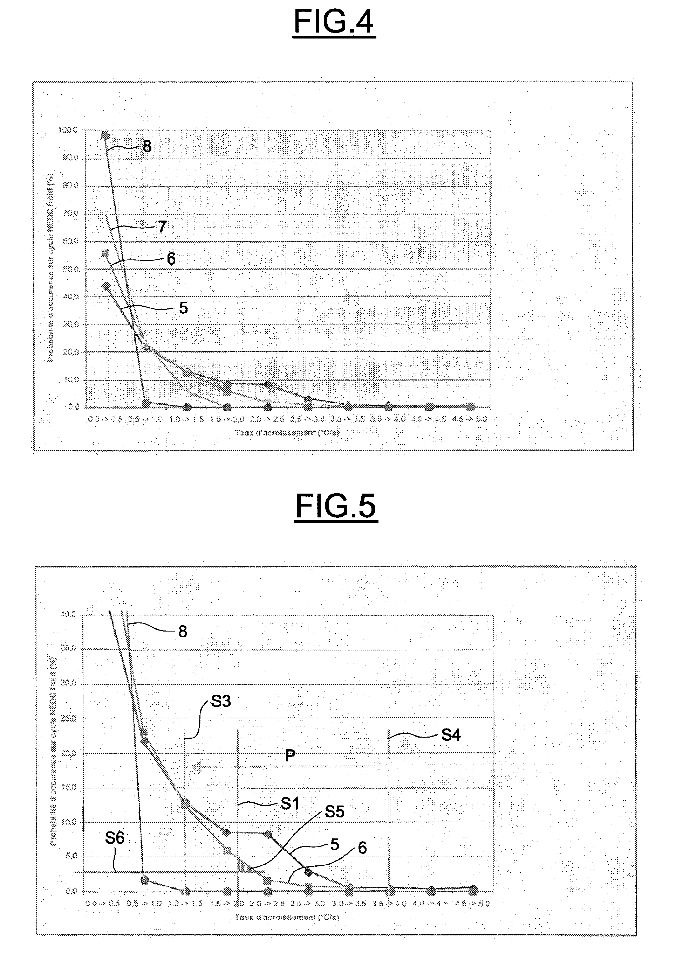

En référence à la figure 4, les variations de température en amont et en aval du système 28 sont divisées en classes de valeurs prédéterminées de variations de température. On notera cependant que la dimension de ces classes est paramétrable. Un tel échantillonnage permet de déterminer le nombre de valeurs de dérivées de température en amont et en aval du système 28, pour différents types de systèmes de traitement, et également en l'absence de systèmes de traitement, pour chacune de ces classes, pendant une période d'observation paramétrable donnée qui correspond, dans l'exemple de réalisation considéré, sur un cycle NEDC froid.

On peut voir sur cette figure 4, que la probabilité d'occurrence, sur un cycle, d'une variation de la dérivée de la température en amont comprise entre 1°C/s et 1,5°/s est de 0,13 (courbe 5). Pour cette sollicitation, la probabilité d'obtention d'une réponse *dTaval* comprise entre 1°C/s et 1,5°C/s est de 0,13 en l'absence de système de traitement (courbe 6), de 0,06 pour un organe à faible inertie thermique (courbe 7) et de 0 pour un organe à forte inertie thermique, en l'espèce un système à base de carbure de silicium (courbe 8).

On constate donc que, selon l'organe de dépollution utilisé, les probabilités d'obtention du signal *dTaval* par classes de valeur sont différentes, cela pour une même sollicitation.

Il apparaît également une valeur de seuil de la dérivée *dTaval* au-delà de laquelle la probabilité d'obtenir une valeur supérieure de la dérivée *dTaval* est nulle. Cette valeur de seuil dépend de l'inertie thermique de l'organe de dépollution utilisée.

En particulier, pour un système de traitement 28 à base de carbure de silicium, la valeur de seuil est de 1°C/s, alors que la valeur de seuil est de 1,5°C/s pour un système de traitement à base de cordiérite.

On remarque également que pour la classe de valeurs de variations de température comprise entre 0,5°C/s et 1°C/s, il est impossible de distinguer une ligne d'échappement pourvue d'un système de traitement à forte inertie thermique d'une ligne d'échappement dépourvue d'un système de traitement. Aussi, comme visible sur la figure 5, la détection de présence du système de traitement 28 n'est effectuée que pour des dérivées de température amont *dTamont* supérieures à la valeur de seuil S3. Dans l'exemple considéré, cette valeur de seuil est fixée à 1°C/s.

Cette plage P de détection est bornée, en valeur supérieure, par un seuil S4 qui correspond aux classes de variations de température à partir desquelles la probabilité d'obtenir un accroissement de variation de température est nulle.

Comme indiqué précédemment en référence à la figure 2, pour procéder à la détection de la présence du système de traitement 28, on compare la dérivée de la température *dTaval* élaborée à partir des signaux fournis par le capteur 40 avec la valeur de seuil S1 calibrée, puis le nombre de dépassements est comptabilisé et dénombré en vue de la prise de décision D.

En d'autres termes, on considère que le système de traitement 28 est absent lorsque les dérivées de température élaborées à partir des signaux fournis par le capteur aval 40 se situent dans une surface S5 délimitée par le seuil S1, par la courbe 6 correspondant à la variation de dérivées de température aval, en l'absence de système de traitement 28, et par un seuil minimum S6, de manière à éliminer les valeurs qui correspondent à une probabilité trop faible.

## Revendications

1. Procédé de détection de présence d'un système de traitement d'effluents gazeux (28) dans une ligne d'échappement (22) d'un moteur à combustion interne de véhicule automobile, **caractérisé en ce qu'**il comporte les étapes consistant à :
- déterminer la dérivée de la température (*dTamont*) en amont du système de traitement (28),
- déterminer la dérivée de la température (*dTaval*) en aval du système de traitement, et
- comparer la dérivée de la température en aval du système de traitement avec une valeur de seuil (*seuil 1*) de détection d'absence du système de traitement, à partir d'un niveau prédéterminé de dérivée de la température en amont du système de traitement.

2. Procédé selon la revendication 1, **caractérisé en ce que** l'on incrémente un compteur (44) à chaque dépassement de la valeur de seuil (*seuil 1*) et l'on décide que le système de traitement est absent lorsque le niveau de comptage du compteur dépasse une deuxième valeur de seuil (*seuil 2*) prédéterminée.

3. Procédé selon l'une des revendications 1 et 2, **caractérisé en ce que** l'on compare la dérivée de la température (*dTaval*) en aval du système (28) avec la valeur de seuil dès que la dérivée de la température en amont du système dépasse une troisième valeur de seuil (*seuil 3*).

4. Procédé selon l'une quelconque des revendications 1 à 3, **caractérisé en ce que** l'on divise les variations de température en amont et en aval en classes de valeurs prédéterminées de variations de température et l'on procède à une détection de l'absence du système de traitement (28) sur un ensemble de classes de valeurs de variations de température prédéterminées.

5. Procédé selon la revendication 4, **caractérisé en ce que** chaque classe de valeurs étant associée à une probabilité d'apparition d'une variation correspondante de température, on procède à ladite détection pour des classes de valeurs supérieures à une classe de valeurs à partir de laquelle la probabilité d'obtention d'une variation correspondante de température pour une ligne d'échappement (22) pourvue d'un système de traitement prédéterminé est nulle, et inférieures à une classe de valeurs à partir de laquelle la probabilité d'obtenir un accroissement de variations de température est nulle.

6. Procédé selon la revendication 5, **caractérisé en ce que** l'on décide que le système de traitement (28) est absent dès que la probabilité d'obtenir une variation de température en aval du système de traitement supérieure à une valeur de seuil prédéterminée est inférieure à une probabilité d'obtenir ladite variation pour une ligne d'échappement dépourvue de système de traitement, et supérieure à une probabilité minimale.

7. Dispositif de détection de présence d'un système de traitement (28) d'effluents gazeux d'une ligne d'échappement d'un moteur à combustion interne, comprenant des moyens (30) de détermination de la dérivée de la température (*dTamont*, *dTaval*) en amont et en aval du système et une unité centrale (30) comprenant des moyens de comparaison (42) pour comparer la valeur déterminée de la dérivée de la température en aval du système de traitement avec une valeur de seuil (*seuil I*) de détection d'absence du système de traitement, à partir d'un niveau prédéterminé de dérivée de la température en amont du système de traitement.

8. Dispositif selon la revendication 7, **caractérisé en ce qu'**il comporte en outre un compteur (44) piloté par la sortie des moyens de comparaison et qui s'incrémente à chaque dépassement de la valeur de seuil et des deuxièmes moyens de comparaison (46) pour comparer le niveau de comptage avec une deuxième valeur de seuil (*seuil 2*) à partir de laquelle on décide que le système de traitement est absent.

9. Système de traitement selon la revendication 8, **caractérisé en ce qu'**il comporte des troisièmes moyens de comparaison (48) pour comparer la valeur calculée de la dérivée de température en amont du système de traitement avec une troisième valeur de seuil (*seuil 3*), la dérivée de la température en aval du système de traitement (28) étant comparée à la première valeur de seuil (*seuil 1*) dès que la dérivée de la température en amont du système de traitement (28) dépasse la troisième valeur de seuil (*seuil 3*).

## Claims

1. Method for detecting the presence of an exhaust gas treatment system (28) in an exhaust line (22) of a motor vehicle internal combustion engine, **characterized in that** it includes the following stages consisting in:
- determining the derivative of the temperature *(dTupstream)* upstream of the treatment system (28);
- determining the derivative of the temperature *(dTdownstream)* downstream of the treatment system; and
- comparing the derivative of the temperature downstream of the treatment system with a threshold value *(threshold 1)* for detecting the absence of the treatment system, using a preset level of the derivative of the temperature upstream of the treatment system.

2. Method according to Claim 1, **characterized in that** a counter (44) is incremented each time the threshold value *(threshold 1)* is exceeded and it is concluded that the treatment system is absent when the count level of the counter exceeds a second preset threshold value *(threshold 2).*

3. Method according to one of Claims 1 and 2, **characterized in that** the derivative of the temperature *(dTdownstream)* downstream of the system (28) is compared with the threshold value when the derivative of the temperature upstream of the system exceeds a third threshold value *(threshold 3)*.

4. Method according to any one of Claims 1 to 3, **characterized in that** the upstream and downstream temperature variations are divided into classes of preset values of temperature variations and a detection of the absence of the treatment system (28) is carried out on a set of preset temperature variation value classes.

5. Method according to Claim 4, **characterized in that** each class of values being associated with a probability of occurrence of a corresponding temperature variation, said detection is carried out for classes of values higher than a class of values above which the probability of obtaining a corresponding temperature variation for an exhaust line (22) provided with a designated treatment system is zero, and lower than a class of values above which the probability of obtaining an increase in temperature variations is zero.

6. Method according to Claim 5, **characterized in that** it is concluded that the treatment system (28) is absent when the probability of obtaining a temperature variation downstream of the treatment system higher than a preset threshold value is lower than a probability of obtaining said variation for an exhaust line not provided with a treatment system, and higher than a minimum probability.

7. Device for detecting the presence of an exhaust gas treatment system (28) in an exhaust line of an internal combustion engine, comprising determination means (30) for calculating the derivative of the temperature *(dTupstream*, *dTdownstream)* upstream and downstream of the system and a central processing unit (30) comprising comparison means (42) for comparing the calculated value of the derivative of the temperature downstream of the treatment system with a threshold value *(threshold 1)* for detecting the absence of the treatment system, using a present level of the derivative of the temperature upstream of the treatment system.

8. Device according to Claim 7, **characterized in that** it includes moreover a counter (44) controlled by the output of the comparison means and which is incremented each time the threshold value is exceeded, and second comparison means (46) for comparing the count level with a second threshold value *(threshold 2)* above which it is concluded that the treatment system is absent.

9. Treatment system according to Claim 8, **characterized in that** it includes third comparison means (48) for comparing the calculated value of the derivative of the temperature upstream of the treatment system with a third threshold value *(threshold 3)*, the derivative of the temperature downstream of the treatment system (28) being compared with the first threshold value *(threshold 1)* when the derivative of the temperature upstream of the treatment system (28) exceeds the third threshold value *(threshold 3).*

## Patentansprüche

1. Verfahren zur Erfassung der Anwesenheit eines Abgasverarbeitungssystems (28) in einer Abgasanlage (22) eines Kraftfahrzeug-Verbrennungsmotors, **dadurch gekennzeichnet, dass** es die Schritt aufweist, die darin bestehen:
- die Ableitung der Temperatur (dTamont) auf der Einströmseite des Verarbeitungssystems (28) zu bestimmen,
- die Ableitung der Temperatur (dTaval) auf der Ausströmseite des Verarbeitungssystems zu bestimmen, und
- die Ableitung der Temperatur auf der Ausströmseite des Verarbeitungssystems mit einem Schwellwert (seuil 1) der Abwesenheitserfassung des Verarbeitungssystems ausgehend von einem vorbestimmten Ableitungspegel der Temperatur auf der Einströmseite des Verarbeitungssystems zu vergleichen.

2. Verfahren nach Anspruch 1, **dadurch gekennzeichnet, dass** ein Zähler (44) bei jeder Überschreitung des Schwellwerts (seuil 1) inkrementiert und entschieden wird, dass das Verarbeitungssystem abwesend ist, wenn der Zählpegel des Zählers einen zweiten vorbestimmten Schwellwert (seuil 2) überschreitet.

3. Verfahren nach einem der Ansprüche 1 und 2, **dadurch gekennzeichnet, dass** die Ableitung der Temperatur (dTaval) auf der Ausströmseite des Systems (28) mit dem Schwellwert verglichen wird, sobald die Ableitung der Temperatur auf der Einströmseite des Systems einen dritten Schwellwert (seuil 3) überschreitet.

4. Verfahren nach einem der Ansprüche 1 bis 3, **dadurch gekennzeichnet, dass** die einströmseitigen und ausströmseitigen Temperaturschwankungen in Klassen von vorbestimmten Werten von Temperaturschwankungen aufgeteilt werden, und dass eine Erfassung der Abwesenheit des Verarbeitungssystems (28) an einer Einheit von Klassen von vorbestimmten Werten von Temperaturschwankungen durchgeführt wird.

5. Verfahren nach Anspruch 4, **dadurch gekennzeichnet, dass**, da jede Werteklasse einer Wahrscheinlichkeit eines Auftretens einer entsprechenden Temperaturschwankung zugeordnet ist, die Erfassung für Werteklassen, die höher sind als eine Werteklasse, von der ausgehend die Wahrscheinlichkeit des Erhalts einer entsprechenden Temperaturschwankung für eine mit einem vorbestimmten Verarbeitungssystem versehene Abgasanlage (22) gleich Null ist, und niedriger sind als eine Werteklasse, von der ausgehend die Wahrscheinlichkeit des Erhalts einer Zunahme von Temperaturschwankungen gleich Null ist, durchgeführt wird.

6. Verfahren nach Anspruch 5, **dadurch gekennzeichnet, dass** entschieden wird, dass das Verarbeitungssystem (28) abwesend ist, sobald die Wahrscheinlichkeit des Erhalts einer Temperaturschwankung auf der Ausströmseite des Verarbeitungssystems höher als ein vorbestimmter Schwellwert niedriger als eine Wahrscheinlichkeit, die Schwankung für eine Abgasanlage zu erhalten, die kein Verarbeitungssystem hat, und höher als eine minimale Wahrscheinlichkeit ist.

7. Vorrichtung zur Erfassung der Anwesenheit eines Verarbeitungssystems (28) von Abgasen einer Abgasanlage eines Verbrennungsmotors, die Einrichtungen (30) zur Bestimmung der Ableitung der Temperatur (dTamont, dTaval) auf der Einströmseite und auf der Ausströmseite des Systems und eine Zentraleinheit (30) enthält, die Vergleichseinrichtungen (42) enthält, um den bestimmten Wert der Ableitung der Temperatur auf der Ausströmseite des Verarbeitungssystems mit einem Schwellwert (seuil 1) der Erfassung der Abwesenheit des Verarbeitungssystems ausgehend von einem vorbestimmten Pegel der Ableitung der Temperatur auf der Einströmseite des Verarbeitungssystems zu vergleichen.

8. Vorrichtung nach Anspruch 7, **dadurch gekennzeichnet, dass** sie außerdem einen Zähler (44), der vom Ausgang der Vergleichseinrichtungen gesteuert wird und sich bei jeder Überschreitung des Schwellwerts inkrementiert, und zweite Vergleichseinrichtungen (46) aufweist, um den Zählpegel mit einem zweiten Schwellwert (seuil 2) zu vergleichen, von dem ausgehend entschieden wird, dass das Verarbeitungssystem abwesend ist.

9. Verarbeitungssystem nach Anspruch 8, **dadurch gekennzeichnet, dass** es dritte Vergleichseinrichtungen (48) aufweist, um den berechneten Wert der Temperaturableitung auf der Einströmseite des Verarbeitungssystems mit einem dritten Schwellwert (seuil 3) zu vergleichen, wobei die Ableitung der Temperatur auf der Ausströmseite des Verarbeitungssystems (28) mit dem ersten Schwellwert (seuil 1) verglichen wird, sobald die Ableitung der Temperatur auf der Einströmseite des Verarbeitungssystems (28) den dritten Schwellwert (seuil 3) überschreitet.
